# EUROPÄISCHE PATENTSCHRIFT

(11) **EP 1 694 944 B1**
(45) Veröffentlichungstag und Bekanntmachung des Hinweises auf die Patenterteilung: **16.04.2008**
(21) Anmeldenummer: 04802783.3
(22) Anmeldetag: 20.11.2004
(51) Int. Cl.: F01D 15/10, F02C 7/268, F02C 3/113

(54) **GASTURBINE, INSBESONDERE FLUGTRIEBWERK**
GAS TURBINE, PARTICULARLY AN AIRCRAFT ENGINE
TURBINE A GAZ, NOTAMMENT GROUPE MOTOPROPULSEUR

(30) Priorität: 18.12.2003 DE 10359559
(43) Veröffentlichungstag der Anmeldung: 30.08.2006
(73) Patentinhaber: MTU Aero Engines GmbH, 80995 München (DE)
(72) Erfinder: HERRMANN, Hubert, 85778 Haimhausen (DE)
(86) Internationale Anmeldenummer: PCT/DE2004/002572
(87) Internationale Veröffentlichungsnummer: WO 2005/059316

(56) Entgegenhaltungen:
- GB-A- 1 041 587
- US-A- 5 867 979
- US-B1- 6 459 750
- PROVOST M J ED - INSTITUTE OF ELECTRICAL AND ELECTRONICS ENGINEERS: "The more electric aero-engine: a general overview from an engine manufacturer" PROCEEDINGS OF THE 14TH. INTERNATIONAL SYMPOSIUM ON POWER SEMICONDUCTOR DEVICES & ICS. ISPSD'02. SANTA FE, NM, JUNE 4 - 7, 2002, INTERNATIONAL SYMPOSIUM ON POWER SEMICONDUCTOR DEVICES & IC'S, NEW YORK, NY : IEEE, US, 4. Juni 2002 (2002-06-04), Seiten 246-251, XP010602915 ISBN: 0-7803-7318-9

## Beschreibung

Die Erfindung betrifft eine Gasturbine, insbesondere ein Flugtriebwerk, nach dem Oberbegriff des Patentanspruchs 1.

Triebwerke von Flugzeugen, sei es zivile Flugtriebwerke oder militärische Flugtriebwerke, erzeugen neben einem Vorschub zur Fortbewegung des Flugzeugs auch Energie zur Versorgung von Anbaueinrichtungen bzw. Nebenaggregaten der Gasturbine oder zur Versorgung flugzeugseitiger Systeme, wie z. B. der Klimaanlage. Bei den Anbaueinrichtungen, Nebenaggregaten oder auch flugzeugseitigen Systemen eines Flugtriebwerks kann es sich um hydraulisch, pneumatisch oder auch elektrisch bzw. elektromotorisch angetriebene Einrichtungen, Aggregate oder Systeme handeln.

Bei der Entwicklung von Flugzeugen ist ein eindeutiger Trend dahingehend festzustellen, dass zunehmend mehr elektrische Energie im Flugzeug benötigt wird. Dies liegt zum einen darin begründet, dass hydraulisch oder pneumatisch betriebene Anbaueinrichtungen oder Nebenaggregate der Gasturbinen durch elektromotorisch betriebene Anbaueinrichtungen oder Nebenaggregate ersetzt werden, und dass andererseits ein immer größerer Energiebedarf pro Sitzplatz im Flugzeug benötigt wird. Die Flugtriebwerke müssen daher immer größere elektrische Leistungen bzw. eine immer größere elektrische Energie bereitstellen. Derartige Flugtriebwerke werden auch als More Electric Engine" (MEE) bezeichnet, wobei eine Übersicht solcher Flugtriebwerke von M.J. Provost", "The more electric aero-engine : a general overview from an engine manufacturer", IS3N: 0-7803-7318-9 gegeben wird.

Zur Erzeugung von elektrischer Energie zur Versorgung der Anbaueinrichtungen oder Nebenaggregate der Gasturbine sowie der flugzeugseitigen Systeme ist es aus dem Stand der Technik bereits bekannt, einem Kerntriebwerk der Gasturbine mechanische Energie zu entnehmen, die z. B. für den Antrieb von Pumpen und Generatoren verwendet wird. Die DE 41 31 713 C2 zeigt ein Flugtriebwerk, wobei einem Kerntriebwerk Wellenleistung entnommen wird und diese Wellenleistung Nebenaggregaten zugeführt wird.

Nach dem Stand der Technik sind Generatoren zur Erzeugung elektrischer Energie als Nebenaggregate bzw. Anbaueinrichtungen der Gasturbine ausgebildet und demnach als separate Baugruppen ausgeführt und außerhalb des Bereichs der eigentlichen Gasturbine montiert.

Hiervon ausgehend liegt der vorliegenden Erfindung das Problem zu Grunde, eine neuartige Gasturbine, insbesondere ein neuartiges Flugtriebwerk, zu schaffen.

Dieses Problem wird dadurch gelöst, dass die eingangs genannte Gasturbine durch die Merkmale des kennzeichnenden Teils des Patentanspruchs 1 weitergebildet ist. Erfindungsgemäß ist der Generator in das Innere der Gasturbine derart integriert, dass der oder jede Läufer des Generators dem Rotor und der oder jede Ständer des Generators dem Stator zugeordnet ist, wobei hierdurch Bewegungsenergie des Rotors vom Generator in elektrische Energie wandelbar ist.

Im Sinne der hier vorliegenden Erfindung wird vorgeschlagen, den Generator zur Erzeugung elektrischer Energie in das Innere der Gasturbine zu integrieren. Hierdurch ergibt sich eine Vereinfachung des Aufbaus einer als "More Electric Engine" ausgebildeten Gasturbine.

Nach einer vorteilhaften Weiterbildung der Erfindung ist der oder jede Läufer des Generators der Rotorwelle des Rotors zugeordnet, wobei der oder jede Läufer mehrere Polstücke aufweist, die entweder als Einheit oder einzeln an der Rotorwelle befestigt sind. Der oder jede Ständer des Generators ist dann vorzugsweise einem statorseitigen Lagerblock der Rotorwelle zugeordnet.

Nach einer alternativen vorteilhaften Weiterbildung der Erfindung ist der oder jede Läufer des Generators den Laufschaufeln des Rotors zugeordnet, wobei Polstücke in die Laufschaufeln integriert sind oder den Enden der Laufschaufeln zugeordnet sind. Der oder jede Ständer des Generators ist dann vorzugsweise dem Gehäuse des Stators und/oder den feststehenden Leitschaufeln des Stators zugeordnet.

Vorzugsweise ermöglichen Steuerungsmittel den Generator zum Start der Gasturbine als Motor zu betreiben und nach dem Start der Gasturbine den Generator zur Erzeugung elektrischer Energie zu verwenden. Überschüssige elektrische Energie der Gasturbine ist vorzugsweise während des Motorbetriebs des Generators in die Gasturbine zum Antrieb des Rotors der Gasturbine einleitbar.

Bevorzugte Weiterbildungen der Erfindung ergeben sich aus den abhängigen Unteransprüchen und der nachfolgenden Beschreibung.

Ausführungsbeispiele der Erfindung werden, ohne hierauf beschränkt zu sein, an Hand der Zeichnung näher erläutert. Dabei zeigen:
- Fig. 1: einen schematisierten, ausschnittsweisen Querschnitt durch eine erfindungsgemäße Gasturbine nach einem ersten Ausführungsbeispiel der Erfindung;
- Fig. 2: ein Detail der Anordnung gemäß Fig. 1 in Vorderansicht; und
- Fig. 3: einen schematisierten, ausschnittsweisen Querschnitt durch eine erfindungsgemäße Gasturbine nach einem zweiten Ausführungsbeispiel der Erfindung.

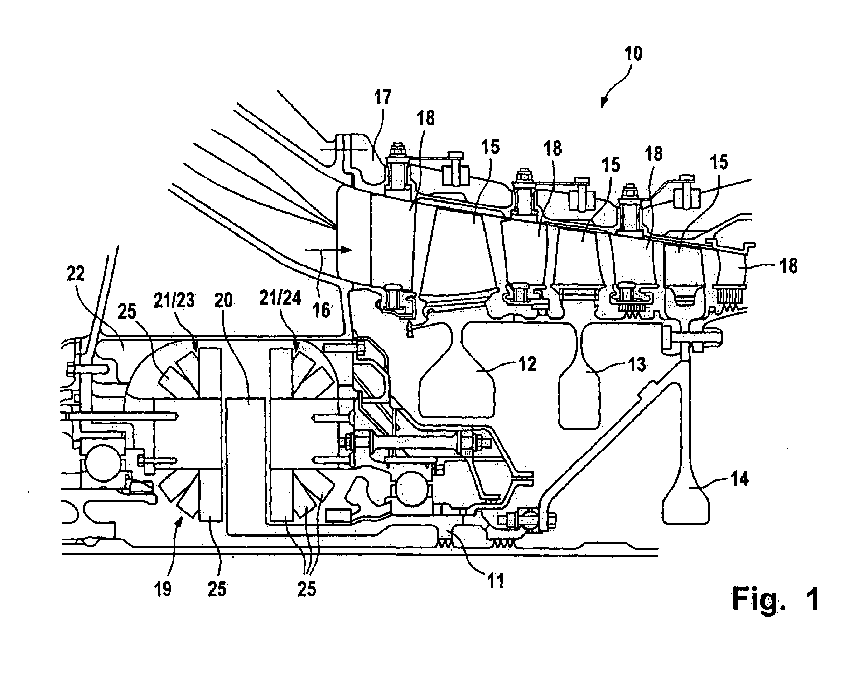

Nachfolgend wird die hier vorliegende Erfindung unter Bezugnahme auf Fig. 1 bis 3 in größerem Detail beschrieben.

Fig. 1 zeigt einen teilweisen Querschnitt durch einen Hochdruckverdichter 10 einer Gasturbine, wobei der Hochdruckverdichter 10 einen Rotor und einen Stator aufweist. Im gezeigten Ausführungsbeispiel umfasst der Rotor eine Rotorwelle 11, die insgesamt drei Rotorscheiben 12, 13 und 14 antreibt. Jeder der Rotorscheiben 12, 13 und 14 sind in Umfangsrichtung nebeneinander angeordnete, zusammen mit den Rotorscheiben 12, 13 bzw. 14 umlaufende bzw. rotierende Laufschaufeln 15 angeordnet. Die einer Rotorscheibe 12 bzw. 13 bzw. 14 zugeordneten Laufschaufeln 15 bilden sogenannte Laufschaufelkränze. In Durchströmungsrichtung bzw. in Axialrichtung des Hochdruckverdichters 10 sind die durch die Rotorscheiben 12, 13 bzw. 14 und die entsprechenden Laufschaufeln 15 gebildeten Laufschaufelkränze hintereinander angeordnet. Die Durchströmungsrichtung des Hochdruckverdichters 10 ist in Fig. 1 durch einen Pfeil 16 visualisiert. Der Rotor des Hochdruckverdichters 10 wird demnach zumindest von der Rotorwelle 11, den Rotorscheiben 12, 13 und 14 sowie den Laufschaufeln 15 gebildet.

Der Stator des Hochdruckverdichters 10 umfasst ein Gehäuse 17 sowie Leitschaufeln 18. Die Leitschaufeln 18 sind ebenso wie das Gehäuse 17 feststehend ausgebildet. Die Leitschaufeln 18 bilden Leitschaufelkränze, die wie die Laufschaufelkränze in Durchströmungsrichtung (Pfeil 16) des Hochdruckverdichters 10 hintereinander angeordnet sind. Zwischen jeweils zwei benachbarten Leitschaufelkränzen aus feststehenden Leitschaufeln 18 ist dabei jeweils ein Laufschaufelkranz aus rotierenden Laufschaufeln 15 angeordnet. Die Laufschaufelkränze rotieren demnach gegenüber dem feststehenden Gehäuse und den ebenfalls feststehenden Leitschaufelkränzen.

Erfindungsgemäß ist in den Hochdruckverdichter 10 ein Generator 19 integriert. Der Generator 19 ist dabei derart in das Innere des Hochdruckverdichters 10 integriert, dass ein Läufer 20 dem Rotor und ein Ständer 21 dem Stator zugeordnet ist. Die Bewegungsenergie des Rotors ist vom Generator 19 in elektrische Energie wandelbar. Im in Fig. 1 gezeigten Ausführungsbeispiel ist der Läufer 20 des Generators 19 der Rotorwelle 11 des Hochdruckverdichters 10 zugeordnet. Der Ständer 21 des Generators 19 ist einem statorseitigen Lagerblock 22 der Rotorwelle 11 zugeordnet.

Im Ausführungsbeispiel der Fig. 1 ist der Generator 19 als Transversalflussmaschine nach dem Prinzip einer sogenannten Switched Reluctance Maschine ausgebildet. Der Ständer 21 des Generators 19 wird in diesem Fall von zwei Teilständern 23 und 24 gebildet, wobei jeder der beiden Teilständer 23 und 24 am Lagerblock 22 befestigt ist und einen kompletten Satz Wicklungen 25 aufweist. Die beiden Teilständer 23 und 24 des Generators 19 sind in Axialrichtung der Gasturbine voneinander beabstandet. Zwischen diesen beiden Teilständern 23 und 24 des Generators 19 rotiert der Läufer 20 desselben.

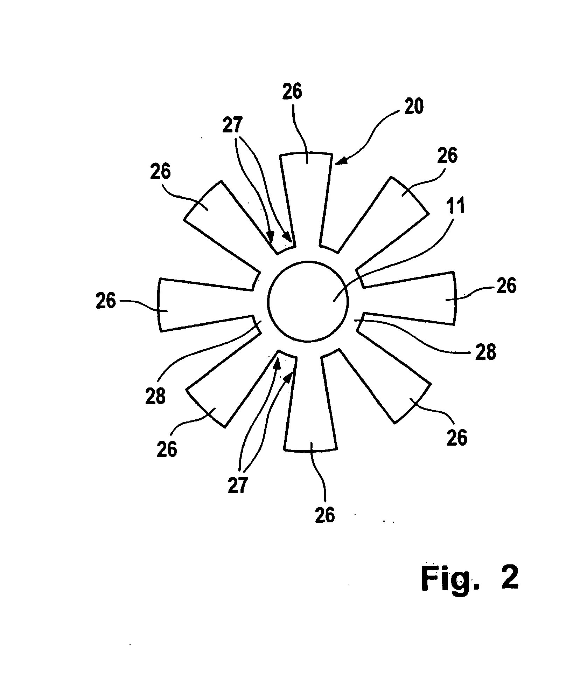

Der Läufer 20 des Generators 19 ist vorzugsweise wie in Fig. 2 dargestellt an der Rotorwelle 11 des Rotors befestigt. Im Ausführungsbeispiel der Fig. 2 umfasst der Läufer 20 insgesamt acht als Weicheisenpole ausgebildete Polstücke 26, wobei die Polstücke 26 an ihren radial innenliegenden Enden 27 über ein hohlzylinderförmiges Elemente 28 miteinander verbunden sind. Der Innendurchmesser des hohlzylinderförmigen Elements 28 ist an den Außendurchmesser der Rotorwelle 11 angepasst, sodass der Läufer 20 des Generators 19 als Einheit auf die Rotorwelle 11 aufgesteckt und mit dieser verbunden werden kann.

Im Unterschied zum gezeigten Ausführungsbeispiel sind jedoch auch andere Befestigungsmethoden des Läufers an der Rotorwelle 11 vorstellbar. So können die Polstücke des Läufers des Generators auch einzeln an der Rotorwelle 11 befestigt sein, indem die Polstücke mit ihren radial innenliegenden Enden unmittelbar in der Rotorwelle 11 befestigt sind.

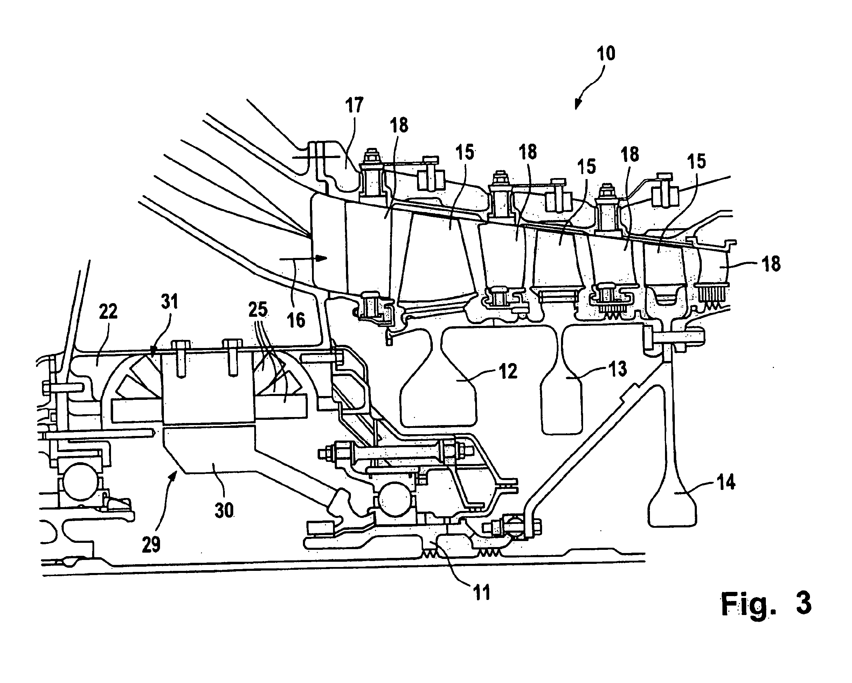

Wie bereits erwähnt, ist im Ausführungsbeispiel der Fig. 1 der Generator 19 als Transversalflussmaschine ausgebildet. Im Unterschied hierzu kann, wie dies Fig. 3 zeigt, auch ein Generator 29 in den Hochdruckverdichter 10 integriert sein, der als sogenannte Trommelläufermaschine ausgebildet ist. Da sich die Ausführungsbeispiele gemäß Fig. 1 und 3 lediglich durch die konkrete Ausführung des Generators unterscheiden, werden für gleiche Baugruppen gleiche Bezugsziffern verwendet und es wird auf die Ausführungen zu Fig. 1 verwiesen.

Auch beim Ausführungsbeispiel der Fig. 3 ist ein Läufer 30 des Generators 29 der Rotorwelle 11 und ein Ständer 31 dem Lagerblock 22 des Hochdruckverdichters 10 zugeordnet. Beim Ausführungsbeispiel der Fig. 1 rotiert der Läufer 20 des Generators 19 zwischen zwei mit axialem Abstand voneinander positionierten Teilständern 23 und 24. Beim Ausführungsbeispiel der Fig. 3 hingegen rotiert der Läufer 30 gegenüber einem den Läufer 30 in radialer Richtung umschließenden Ständer 31. Die Ausführungsform der Fig. 1, in welcher der Generator 19 als Transversalflussmaschine ausgebildet ist, verfügt gegenüber dem Ausführungsbeispiel der Fig. 3, in welcher der Generator 29 als Trommelläufermaschine ausgebildet ist, über den Vorteil, dass durch Fliehkraft und Wärme induzierte Ausdehnungen des Läufers 20 der Luftspalt zwischen dem Läufer 20 und dem Stator 21 nicht verändert wird. Nachteilig ist hingegen gegenüber dem Ausführungsbeispiel der Fig. 3, dass sich beim Ausführungsbeispiel der Fig. 1 die beiden Teilständer 23 und 24 gegenseitig anziehen und dieselben demnach am Lagerblock 22 mit einer ausreichenden Kraftabfangung befestigt werden müssen. Sowohl das Ausführungsbeispiel der Fig. 1 als auch das Ausführungsbeispiel der Fig. 3 verfügen demnach über gewisse Vorteile.

Es liegt weiterhin im Sinne der hier vorliegenden Erfindung, der Gasturbine bzw. dem dargestellten Hochdruckverdichter 10 Steuermittel zuzuordnen, die einerseits einen Betrieb des Generators 19 bzw. 29 als Generator zur Erzeugung elektrischer Energie aus der Bewegungsenergie des Rotors und andererseits als Motor zum Antreiben der Rotorwelle 11 auf Basis bereitgestellter elektrischer Energie ermöglichen. Es liegt demnach im Sinne der hier vorliegenden Erfindung, den Generator 19 bzw. 29 nicht lediglich zur Erzeugung elektrischer Energie zu verwenden, sondern vielmehr auch zum Antreiben der Rotorwelle 11. Die Verwendung des Generators 19 bzw. 29 im Motorbetrieb kommt insbesondere beim Starten der Gasturbine in Betracht. Durch Bereitstellung elektrischer Energie kann dann mithilfe des Generators 19 bzw. 29 die Rotorwelle 11 des Hochdruckverdichters 10 auf eine Solldrehzahl hochgefahren werden. Nach dem Starten wird dann über die Steuermittel der Generator 19 bzw. 29 zur Erzeugung elektrischer Energie eingesetzt.

Im Sinne der hier vorliegenden Erfindung ist es auch möglich, nicht nur in den Hochdruckverdichter 10 einen Generator 19 bzw. 29 auf die oben beschriebene Art und Weise zu integrieren, sondern vielmehr auch in einen nicht-dargestellten Niederdruckverdichter der Gasturbine. Sind sowohl in den Hochdruckverdichter als auch in den Niederdruckverdichter entsprechende Generatoren integriert, so liegt es im Sinne der hier vorliegenden Erfindung, die Generatoren von Hochdruckverdichter und Niederverdichter miteinander zu koppeln. Hierdurch kann dann ein Leistungsausgleich zwischen dem Hochdruckverdichter und dem Niederdruckverdichter durchgeführt werden. Erzeugt zum Beispiel der Generator des Hochdruckverdichters mehr elektrische Energie als benötigt, so kann in diesem Fall der Generator des Niederdruckverdichters im Motorbetrieb eingesetzt werden, um die überschüssige elektrische Energie zum Antrieb der Rotorwelle des Niederdruckverdichters zu verwenden. Bislang war es nach dem Stand der Technik erforderlich, überschüssige elektrische Energie in einer Widerstandseinheit als Verlustwärme zu verheizen. Mit der hier vorliegenden Erfindung ist es möglich, derartige überschüssige elektrische Energie in die Gasturbine als Bewegungsenergie zurückzuführen und somit den Gesamtwirkungsgrad der Gasturbine zu verbessern. Auch ist es vorstellbar, in dem Fall, in dem der Generator der Niederdruckturbine zuviel elektrische Energie erzeugt, diese überschüssige elektrische Energie in den Hochdruckverdichter zurückzuführen, indem der Generator des Hochdruckverdichters dann im Motorbetrieb betrieben und die überschüssige elektrische Energie des Generators des Niederdruckverdichters zum Antrieb der Rotorwelle des Hochdruckverdichters verwendet wird.

Im Sinne der hier vorliegenden Erfindung wird weiterhin vorgeschlagen, die Wicklungen 25 der Ständer 21 bzw. 31 der Generatoren 19 bzw. 29 mit Treibstoff zu kühlen. So liegt es im Sinne der vorliegenden Erfindung, die Wicklungen 25 als Hohlleiterwicklungen auszuführen und durch diese Hohlleiterwicklungen zur Kühlung Treibstoff zu leiten. Der die Wicklungen 25 durchfließende Treibstoff kann dann im Anschluss zu Treibstoffeinspritzdüsen im Bereich einer Brennkammer der Gasturbine weitergeleitet werden. Eine derartige Treibstoffkühlung der Wicklungen 25 der Ständer 21 bzw. 31 erlaubt eine besonders effiziente Kühlung derselben und macht die aus dem Stand der Technik bekannte, aufwändige Ölkühlung überflüssig.

Fig. 1 und 3 zeigen lediglich einen teilweisen axialen Längsschnitt durch den Hochdruckverdichter 10, sodass in Fig. 1 und 3 nur der oberhalb der Rotorwelle 11 verlaufende Abschnitt des Hochdruckverdichters 10 dargestellt ist. Die in Fig. 1 bis 3 dargestellten Bauteile erstrecken sich in Umfangsrichtung um die Rotorwelle 11 herum. Um eine einfachere Montierbarkeit der Ständer 21 bzw. 31 der Generatoren 19 bzw. 29 zu ermöglichen, wird nach einem weiteren Aspekt der hier vorliegenden Erfindung vorgeschlagen, die Ständer 21 bzw. 31 zumindest zweigeteilt auszuführen. Bei einer zweiteiligen Ausführung der Ständer 21 und 31 würden sich dieselben jeweils in Umfangsrichtung um 180° um die Rotorwelle 11 herum erstrecken. Selbstverständlich sind auch andere Teilungen möglich, wobei sich die Winkel- bzw. Umfangserstreckung automatisch aus der Teilung der Ständer 21 sowie 31 ergibt. Um eine Teilung der Ständer 21 sowie 31 zu ermöglichen, werden im Sinne der hier vorliegenden Erfindung zwei Maßnahmen vorgeschlagen: Nach einer ersten Maßnahme sind die Wicklungen 25 der Ständer 21 bzw. 31 als Wellenwicklungen auszuführen. Nach einer zweiten Maßnahme wird vorgeschlagen Nutanzahl, Anzahl der Pole, Statordurchmesser und weitere Designparameter des Generators so zu wählen, dass pro Ständernut nur eine Windung erforderlich ist und jeder Teilständer die gesamte erforderliche Windungszahl trägt, die zur Erzeugung der elektrischen Energie erforderlich ist. Es ist demnach auch eine Erkenntnis der hier vorliegenden Erfindung, dass die durch Ausführung der Wicklungen als Wellenwicklung in Kombination mit der Forderung, dass pro Nut lediglich eine Windung vorzusehen ist, der Ständer 21 bzw. 31 des Generators 19 bzw. 29 geteilt ausgeführt werden kann. Hierdurch ist es möglich, die Montage der Gasturbine deutlich zu vereinfachen.

In den gezeigten Ausführungsbeispielen sind die Läufer 20 bzw. 30 der Generatoren 19 bzw. 29 allesamt der Rotorwelle 11 und die Ständer 21 bzw. 31 allesamt Lagerblöcken 22 für die Rotorwelle 11 zugeordnet. Im Unterschied zu den gezeigten Ausführungsbeispielen ist es ebenfalls möglich, den Läufer des Generators den rotierenden Laufschaufeln zuzuordnen. Als Weicheisenpole ausgebildete Polstücke können zum Beispiel den radial außenliegenden Enden der rotierenden Laufschaufeln zugeordnet sein und zusammen mit den Laufschaufeln gegenüber dem feststehenden Gehäuse und den ebenfalls feststehenden Leitschaufeln rotieren. In diesem Fall müssen selbstverständlich die rotierenden Laufschaufeln derart ausgeführt werden, dass dieselben die durch die Weicheisenpole verursachten, zusätzlichen Fliehkräfte sicher abfangen können. In dem Fall, in dem also die Polstücke des Läufers den rotierenden Laufschaufeln zugeordnet sind, ist der Ständer des Generators entweder den feststehenden Leitschaufeln oder dem feststehenden Gehäuse des Stators der Gasturbine zugeordnet. Auch auf diese Art und Weise lässt sich ein Generator in die Gasturbine integrieren.

## Patentansprüche

1. Gasturbine, insbesondere Flugtriebwerk, mit mindestens einem Stator, mindestens einem Rotor und mindestens einem Generator zur Erzeugung elektrischer Energie, wobei ein Rotor eine Rotorwelle und von der Rotorwelle angetriebene Rotorscheiben mit rotierenden Laufschaufeln aufweist, wobei ein Stator ein Gehäuse und feststehende Leitschaufeln aufweist wobei ein Generator mindestens einen Ständer und mindestens einen Läufer aufweist, und wobei der Generator in das Innere der Gasturbine derart integriert ist, dass der oder jeder Läufer des Generators dem Rotor und der oder jeder Ständer des Generators dem Stator zugeordnet ist, wodurch Bewegungsenergie des Rotors vom Generator in elektrische Energie wandelbar ist, **dadurch gekennzeichnet, dass** der oder jeder Läufer des Generators den Laufschaufeln des Rotors zugeordnet ist, wobei Polstücke in die Laufschaufeln integriert sind oder den radial außenliegenden Enden der Laufschaufeln zugeordnet sind.

2. Gasturbine nach Anspruch 1, **dadurch gekennzeichnet, dass** der oder jeder Ständer des Generators dem Gehäuse des Stators und/oder den feststehenden Leitschaufeln des Stators zugeordnet ist.

3. Gasturbine nach Anspruch 1 oder 2, **dadurch gekennzeichnet, dass** der oder jeder Ständer des Generators Wicklungen aufweist, wobei die Wicklungen treibstoffgekühlt sind.

4. Gasturbine nach Anspruch 3, **dadurch gekennzeichnet, dass** die Wicklungen des oder jeden Ständers als Hohlwicklungen ausgebildet sind, die zur Kühlung von Treibstoff durchströmt sind.

5. Gasturbine nach einem der Ansprüche 1 bis 4, **dadurch gekennzeichnet, dass** Steuerungsmittel den Generator zum Start der Gasturbine als Motor betreiben und nach dem Start der Gasturbine den Generator zur Erzeugung elektrischer Energie einsetzen.

6. Gasturbine nach Anspruch 5, **dadurch gekennzeichnet, dass** überschüssige elektrische Energie während des Motorbetriebs des Generators in die Gasturbine zum Antrieb des Rotors der Gasturbine einleitbar ist.

7. Gasturbine nach einem der Ansprüche 1 bis 6, **dadurch gekennzeichnet, dass** die Gasturbine einen Hochdruckverdichter und einen Niederdruckverdichter aufweist, wobei sowohl der Hochdruckverdichter als auch der Niederdruckverdichter jeweils einen Stator, einen Rotor und einen in den Hochdruckverdichter bzw. den Niederdruckverdichter integrierten Generator aufweisen.

8. Gasturbine nach Anspruch 7, **dadurch gekennzeichnet**, der Hochdruckverdichter und der Niederdruckverdichter über die in dieselben integrierten Generatoren derart gekoppelt sind, dass ein Leistungsausgleich zwischen dem Hochdruckverdichter und dem Niederdruckverdichter ermöglicht ist.

9. Gasturbine nach Anspruch 8, **dadurch gekennzeichnet, dass** dann, wenn der Generator des Hochdruckverdichters mehr elektrische Energie als erforderlich erzeugt, diese überschüssige elektrische Energie vom Generator des Niederdruckverdichters zum Antrieb des Rotors des Niederdruckverdichters verwendbar ist, und dass dann, wenn der Generator des Niederdruckverdichters mehr elektrische Energie als erforderlich erzeugt, diese überschüssige elektrische Energie vom Generator des Hochdruckverdichters zum Antrieb des Rotors des Hochdruckverdichters verwendbar ist.

## Claims

1. Gas turbine, in particular an aircraft engine, with at least one stator, at least one rotor and at least one generator for producing electrical energy, wherein a rotor comprises a rotor shaft and rotor discs with rotating rotor blades driven by the rotor shaft, wherein a stator comprises a housing and fixed vanes, wherein a generator comprises at least one stationary part and at least one rotating part, and wherein the generator is integrated in the interior of the gas turbine in such a way that the rotating part or each rotating part of the generator is associated with the rotor and the stationary part or each stationary part of the generator is associated with the stator, whereby energy of movement of the rotor can be converted by the generator into electrical energy, **characterised in that** the rotating part or each rotating part of the generator is associated with the rotor blades of the rotor, wherein pole pieces are integrated in the rotor blades or are associated with the radially outer-lying ends of the rotor blades.

2. Gas turbine according to claim 1, **characterised in that** the or each stationary part of the generator is associated with the housing of the stator and/or with the fixed vanes of the stator.

3. Gas turbine according to claim 1 or 2, **characterised in that** the or each stationary part of the generator has windings, wherein the windings are cooled by engine fuel.

4. Gas turbine according to claim 3, **characterised in that** the windings of the stationary part or of each stationary part are formed as hollow windings through which engine fuel flows for cooling purposes.

5. Gas turbine according to one of claims 1 to 4, **characterised in that** control means drive the generator as a motor at the start-up of the gas turbine, and after the start-up of the gas turbine use the generator to produce electrical energy.

6. Gas turbine according to claim 5, **characterised in that** excess electrical energy can be supplied during operation of the generator as a motor to the gas turbine to drive the rotor of the gas turbine.

7. Gas turbine according to one of claims 1 to 6, **characterised in that** the gas turbine comprises a high-pressure compressor and a low-pressure compressor, wherein both the high-pressure compressor and the low-pressure compressor comprise in each case a stator, a rotor, and a generator integrated in the high-pressure compressor and in the low-pressure compressor respectively.

8. Gas turbine according to claim 7, **characterised in that** the high-pressure compressor and the low-pressure compressor are coupled via the generators integrated therein, in such a way as to equalise the output between the high-pressure compressor and the low-pressure compressor.

9. Gas turbine according to claim 8, **characterised in that** if the generator of the high-pressure compressor produces more electrical energy than necessary, this excess electrical energy can be used by the generator of the low-pressure compressor to drive the rotor of the low-pressure compressor, and that if the generator of the low-pressure compressor produces more electrical energy than necessary, this excess electrical energy can be used by the generator of the high-pressure compressor to drive the rotor of the high-pressure compressor.

## Revendications

1. Turbine à gaz notamment groupe motopropulseur comportant au moins un stator, au moins un rotor et au moins un générateur pour générer l'énergie électrique,
un rotor ayant un arbre de rotor et des aubes mobiles montées sur des disques de rotor entraînant l'arbre de rotor,
un stator ayant un boîtier et des aubes directrices fixes,
un générateur ayant au moins un stator et au moins un rotor et le générateur est intégré à l'intérieur de la turbine à gaz pour que le ou chaque rotor du générateur soit associé au rotor et que le ou chaque stator du générateur soit associé au stator de la turbine,
l'énergie cinétique du rotor étant transformée par le générateur en énergie électrique,
**caractérisée en ce que**
le ou chaque rotor du générateur est associé aux aubes mobiles du rotor, des pièces polaires étant intégrées dans les aubes du rotor, ou associées aux extrémités radialement extérieures des aubes mobiles.

2. Turbine à gaz selon la revendication 1,
**caractérisée en ce que**
le ou chaque stator du générateur est associé au carter du stator et/ou aux aubes directrices fixes du stator.

3. Turbine à gaz selon la revendication 1 ou 2,
**caractérisée en ce que**
le ou chaque stator du générateur comporte des enroulements et ces enroulements sont refroidis par du carburant.

4. Turbine à gaz selon la revendication 3,
**caractérisée en ce que**
les enroulements du ou de chaque stator sont des enroulements creux et sont traversés par le carburant pour être refroidis.

5. Turbine à gaz selon l'une des revendications 1 à 4,
**caractérisée par**
des moyens de commande pour faire fonctionner le générateur comme moteur pour démarrer la turbine à gaz et après le démarrage de la turbine à gaz, le générateur fournit de l'énergie électrique.

6. Turbine à gaz selon la revendication 5,
**caractérisée en ce que**
pendant le fonctionnement du générateur comme moteur l'énergie électrique en excédent est transmise à la turbine à gaz pour entraîner le rotor de la turbine à gaz.

7. Turbine à gaz selon l'une des revendications 1 à 6,
**caractérisée en ce que**
la turbine à gaz comporte un compresseur haute pression et un compresseur basse pression, et
à la fois le compresseur haute pression et le compresseur basse pression comportent chaque fois un stator, un rotor, et un générateur intégré au compresseur haute pression et/ou au compresseur basse pression.

8. Turbine à gaz selon la revendication 7,
**caractérisée en ce que**
le compresseur haute pression et le compresseur basse pression sont couplés par les générateurs intégrés dans ces compresseurs de façon à permettre une compensation de la puissance entre le compresseur haute pression et le compresseur basse pression.

9. Turbine à gaz selon la revendication 8,
**caractérisée en ce que**
si le générateur du compresseur haute pression génère plus d'énergie électrique que nécessaire, cette énergie électrique en excédent est utilisée par le générateur du compresseur basse pression pour entraîner le rotor du compresseur basse pression, et si le générateur du compresseur basse pression génère plus d'énergie électrique que nécessaire, cette énergie électrique en excédent est utilisée par le générateur du compresseur haute pression pour entraîner le rotor du compresseur haute pression.
